# EUROPÄISCHE PATENTSCHRIFT

(11) **EP 2 450 208 B1**
(45) Veröffentlichungstag und Bekanntmachung des Hinweises auf die Patenterteilung: **14.10.2015**
(21) Anmeldenummer: 10014401.3
(22) Anmeldetag: 09.11.2010
(51) Int. Cl.: B60J 7/00, B60Q 3/02

(54) **Abdeckeinrichtung**
Covering device
Dispositif de recouvrement

(43) Veröffentlichungstag der Anmeldung: 09.05.2012
(73) Patentinhaber: Daimler AG, 70327 Stuttgart (DE)
(72) Erfinder: Grimm, Rainer, 60598 Frankfurt (DE); Riess, Claudia, 64405 Lichtenberg (DE); Boehm, Horst, 60599 Frankfurt (DE)
(74) Vertreter: JENSEN & SON

(56) Entgegenhaltungen:
- EP-A2- 1 527 922
- DE-A1- 10 260 984
- DE-A1- 19 936 537
- DE-A1-102005 032 043
- DE-A1-102008 047 508

## Beschreibung

### Abdeckeinrichtung

Die Erfindung betrifft eine Abdeckeinrichtung, zur Verschattung für ein zumindest abschnittsweise lichtdurchlässiges Dach nach dem Oberbegriff des Anspruchs 1.

Eine solche Abdeckeinrichtung ist aus der DE 10 2008 047 508 A1 bekannt.

Abdeckeinrichtungen dienen der Verschattung eines Innenraums für ein Fahrzeug, um einen Fahrzeuginsassen vor einfallendem Licht zu schützen. Die Abdeckeinrichtung hat dazu eine verfahrbare Abdeckung, beispielsweise in Form eines aufwickelbaren Rollos, die in zumindest einer Position einen Teil des lichtdurchlässigen Daches freigibt und diesen in einer zweiten Position abdeckt. Aus dem Stand der Technik sind Abdeckeinrichtungen bekannt, die eine am vorderen, ausziehbaren Rand der Abdeckung angeordnete Beleuchtungseinrichtung aufweisen, die der Beleuchtung des Fahrzeuginnenraums dient. Die Beleuchtungseinrichtung kann durch Verschieben der Abdeckung beliebig über dem Fahrzeuginsassen positioniert werden, sodass eine flexible Beleuchtung des Fahrzeuginnenraums, beispielsweise zum Lesen, möglich ist. Die Stromversorgung dieser Beleuchtungseinrichtungen ist allerdings sehr aufwändig, da unabhängig von der Position der Abdeckung eine zuverlässige Stromversorgung gewährleitet werden muss. Aus dem Stand der Technik sind Abdeckeinrichtungen bekannt, bei denen seitliche Führungsschienen, in denen die Abdeckung geführt ist, elektrisch leitend ausgebildet sind, sodass die Stromversorgung der Beleuchtungseinrichtung über diese erfolgen kann. Allerdings kann es beispielsweise bei einer zunehmenden Verschmutzung durch Staub zu Kontaktproblemen zwischen Führungsschiene und Abdeckung kommen, sodass eine zuverlässige Stromversorgung nicht gewährleistet ist.

Aufgabe der Erfindung ist es, eine Abdeckeinrichtung bereitzustellen, die eine zuverlässige Stromversorgung eines in die Abdeckung integrierten Leuchtmittels gewährleistet.

Erfindungsgemäß ist bei einer Abdeckeinrichtung zur Verschattung für ein zumindest abschnittsweise lichtdurchlässiges Dach eines Fahrzeugs, mit zumindest einer verfahrbaren Abdeckung, die in ihren verschiedenen Positionen zumindest einen Teil eines lichtdurchlässigen Dachabschnitts abdeckt oder freigibt und mit wenigstens einem Leuchtmittel zur Innenraumbeleuchtung vorgesehen, dass die Abdeckung als aufwickelbare Abdeckbahn ausgebildet ist, an der ein im Wesentlichen in Auszugsrichtung verlaufendes Metallband angebracht ist, das das Leuchtmittel elektrisch mit einer Stromquelle verbindet. Die Stromversorgung erfolgt also nicht über die Führungsschienen oder über ein separates Kabel, sondern über ein Metallband, das an oder in der Abdeckung vorgesehen ist und mit dieser verschoben bzw. aufgewickelt werden kann. Das Metallband ist gewissermaßen ein Teil der Abdeckung. Es sind somit keine zusätzlichen beweglichen Teile oder zusätzlichen Kontakte oder Kontaktschienen im Innenraum des Fahrzeugs erforderlich. Die Verwendung eines solchen Metallbandes als Stromleiter ist sowohl bei starren Abdeckungen mit verschiebbaren Elementen wie auf bei flexiblen Abdeckungen, die beispielsweise eine aufwickelbare Abdeckbahn aufweisen, möglich. Die aufwickelbare Abdeckbahn wird das Metallband automatisch mit dieser aufgewickelt, sodass kein separater Aufrollmechanismus notwendig ist, wie er zum Beispiel bei Verwendung von Kabeln erforderlich ist.

Üblicherweise erfolgt die Positionierung der Abdeckung im Stand der Technik über einen Stellantrieb, der am vorderen, freien Rand der Abdeckung angreift und diesen verschiebt. Bei aufwickelbaren Abdeckungen ist zusätzlich eine Rückholeinrichtung, beispielsweise eine Feder, vorgesehen, die zum einen die Abdeckung gespannt hält, sodass diese nicht durchhängt, und zum anderen beim Zurückfahren der Abdeckung in eine Position, in der der lichtdurchlässige Dachabschnitt freigegeben wird, die Abdeckung wieder auf der Wickelwelle aufrollt. Durch die Verwendung eines Metallbandes kann erfindungsgemäß auf eine solche Rückholeinrichtung verzichtet werden. Das Metallband kann so ausgebildet sein, dass dieses vorgespannt ist und einen Aufrollantrieb für die Abdeckbahn bildet. Das Metallband wirkt hier gewissermaßen als Spiralfeder, die beim Ausziehen aus der aufgerollten Position vorgespannt wird.

Bei einer erfindungsgemäßen Abdeckeinrichtung kann diese Stromversorgung beispielsweise über die Wickelwelle der Abdeckbahn erfolgen, wodurch unabhängig von der Position der Abdeckung eine zuverlässige Stromversorgung der Innenraumbeleuchtung gewährleistet ist.

Ein solches Metallband bietet den Vorteil, dass sich dieses beliebig in oder an der Abdeckbahn positionieren lässt. Es ist beispielsweise denkbar, dass das Metallband randseitig in die Abdeckbahn eingebettet ist, sodass durch das Metallband eine randseitige Versteifung und Stabilisierung sowie Führung der Abdeckung erfolgt. Insbesondere bei Abdeckeinrichtungen mit seitlichen Führungsschienen, in denen die Abdeckung bzw. die Ränder der Abdeckung geführt sind, kann sich das Metallband oder die Metallbänder in diese Führungsschienen erstrecken, sodass die Abdeckung in diesem Bereich versteift ist und eine reibungsärmere Verschiebung der Abdeckung möglich ist.

Vorzugsweise erstreckt sich das Metallband in Auszugsrichtung über die gesamte Länge der Abdeckbahn. Zum einen ist so die Abdeckung bzw. die Abdeckbahn über die gesamte Länge versteift. Zum anderen ist es dadurch möglich, das Metallband an einem Ende elektrisch mit der Stromversorgung des Fahrzeugs und mit dem anderen Ende mit dem Leuchtmittel zu verbinden. Bei einer aufwickelbaren Abdeckung mit einer Wickelwelle kann die Stromversorgung beispielsweise über die Wickelwelle erfolgen.

Zur Versorgung mehrerer Innenraumbeleuchtungen oder zum Anschluss weiterer elektrischer Verbraucher ist es beispielsweise auch denkbar, dass mehrere, insbesondere parallel verlaufende stromleitende Metallbänder vorgesehen sind. Diese bieten zudem den Vorteil, dass eine bessere Versteifung der gesamten Abdeckung der Abdeckeinrichtung möglich ist.

Erfindungsgemäß ist des Weiteren bei der Abdeckeinrichtung, ein Reflektor vorgesehen, insbesondere ein Spiegel, der das vom Leuchtmittel abgegebene Licht unmittelbar in den Fahrzeuginnenraum reflektiert, vorzugsweise zur Ausbildung eines Leselichts. Das Licht wird also nicht direkt in den Innenraum abgestrahlt, sondern über einen Reflektor in den Innenraum reflektiert. Dies ermöglicht eine flexiblere Anordnung des Leuchtmittels, da das Leuchtmittel unabhängig von der Abstrahlrichtung bzw. vom Abstrahlwinkel an der Abdeckung angeordnet werden kann. Insbesondere ist es denkbar, dass das Leuchtmittel so angeordnet ist, dass eine Beleuchtung des Innenraums nur über den Reflektor erfolgt.

Um den Einsatzbereich des Leuchtmittels zu erweitern, ist vorgesehen, den Reflektor zur Änderung des Reflexionswinkels verstellbar, insbesondere schwenkbar zu lagern. Üblicherweise kann die Position des Leuchtmittels und somit die Ausleuchtung des Innenraums nur durch ein Verändern der Position der Abdeckung angepasst werden. Das heißt, eine Verstellung der Beleuchtung ist nur bei einer Verschiebung der Verschattung möglich. Durch die schwenkbare Lagerung des Reflektors hat der Insasse mehr Verstellmöglichkeiten, denn er kann zusätzlich den Abstrahlwinkel des Lichts verändern, sodass das Licht variabler verstellbar ist. Insbesondere ist somit eine Anpassung der Beleuchtungsverhältnisse unabhängig von der Position der Abdeckung möglich. Bei der Verwendung mehrerer Leuchtmittel bzw. mehrerer Reflektoren ist beispielsweise ohne Veränderung der Position der Abdeckung eine individuelle Anpassung der Beleuchtung für jeden Sitzplatz des Fahrzeugs möglich.

Die Verstellbarkeit des Reflektors ist vorzugsweise so ausgebildet, dass der Reflektor in einer Position einen Lichtauslass schließt, wodurch mit dem Reflektor auch eine Verdunkelung für die Innenraumbeleuchtung bzw. des Leselichts möglich ist.

Das Leuchtmittel ist beispielsweise in oder an einem Querspriegel angeordnet, der sich quer zur Fahrzeuglängsachse erstreckt, und an dem ein Längsende der Abdeckung gelagert ist. Ein solcher Querspriegel dient insbesondere bei einer Abdeckung aus einem flexiblen Material, beispielsweise bei einer aufwickelbaren Abdeckbahn, der Stabilisierung des vorderen, freien Randes der Abdeckung. Der Spriegel bietet bei solchen Abdeckung eine stabile Befestigung für das Leuchtmittel und den Reflektor.

Bei entsprechender Dimerisionierung des Spriegels kann dieser auch als Gehäuse für ein Leuchtmittel dienen. Da das Leuchtmittel in diesem Fall am vorderen Rand der Abdeckung angeordnet ist, ist zudem ein Positionieren des Leuchtmittels über den gesamten Verschiebereich des Schiebedachs möglich.

Der Spriegel ist beispielsweise ein zum Verfahren der Abdeckung angetriebener Spriegel. Das heißt, am Spriegel ist ein Antrieb vorgesehen bzw. an diesem greift ein Antrieb an, der den Spriegel in Richtung zur Fahrzeuglängsachse verschieben kann, wodurch die am Spriegel befestigte Abdeckung verfahren wird.

Bei manuellen Ausführungsformen dieser Abdeckeinrichtungen kann an dem Spriegel zusätzlich eine Griffmulde angebracht sein, um die Abdeckeinrichtung einfach von Hand verstellen zu können.

Unabhängig von einer Leselampe ist häufig eine zusätzliche Beleuchtung für den Innenraum gewünscht. Diese kann beispielsweise dadurch bereitgestellt werden, dass am Spriegel wenigstens eine vertikale Lichtaustrittsöffnung vorgesehen ist, an der insbesondere ein Streulicht erzeugender Lichtdurchlasskörper angeordnet ist. Leselampe und Streulicht können also durch ein gemeinsames Leuchtmittel erzeugt werden, indem mehrere Lichtaustrittsöffnungen vorgesehen sind. An einer vertikalen Lichtaustrittsöffnung ist ein Lichtdurchlasskörper vorgesehen, der ein diffuses Streulicht erzeugt, an einem anderen, vorzugsweise horizontalen Lichtauslass kann ein Reflektor vorgesehen sein, der ein verstellbares Leselicht bereitstellt. Ist der Reflektor so ausgebildet, dass dieser den Lichtauslass schließen kann, ist zudem eine wahlweise Zuschaltung des Leselichts ohne zusätzliche Leuchtmittel oder Schalter möglich.

Die Abdeckeinrichtung weist des Weiteren vorzugsweise ein Gehäuse auf, in dem die Abdeckung in der Position, in der der lichtdurchlässige Dachabschnitt freigelegt ist, aufgenommen wird, sodass sie in dieser Position sicher verstaut ist.

Die Abdeckung ist beispielsweise eine aufwickelbare Abdeckbahn. In diesem Fall ist im Gehäuse ein Aufrollmechanismus für die Abdeckbahn untergebracht.

Am freien Ende der Abdeckbahn kann vorzugsweise ein Spriegel vorgesehen sein, der bei aufgerollter Abdeckbahn in eine Öffnung des Gehäuses ragt oder in das Gehäuse eingefahren ist. Der Spriegel kann beispielsweise die Öffnung, durch die die Abdeckbahn aus dem Gehäuse herausgezogen wird, in der Position, in der der lichtdurchlässige Dachabschnitt freigelegt ist, abdecken.

Weitere Vorteile und Merkmale ergeben sich aus der nachfolgenden Beschreibung in Verbindung mit den beigefügten Zeichnungen. In diesen zeigen:
- Figur 1 eine schematische Darstellung einer erfindungsgemäßen Abdeckeinrichtung,
- Figur 2 eine Draufsicht auf die Abdeckeinrichtung aus Figur 1,
- Figur 3 eine Schnittansicht durch die Abdeckeinrichtung aus Figur 1, und - Figur 4 eine Schnittansicht durch den Spriegel der Abdeckeinrichtung aus
Figur 3.

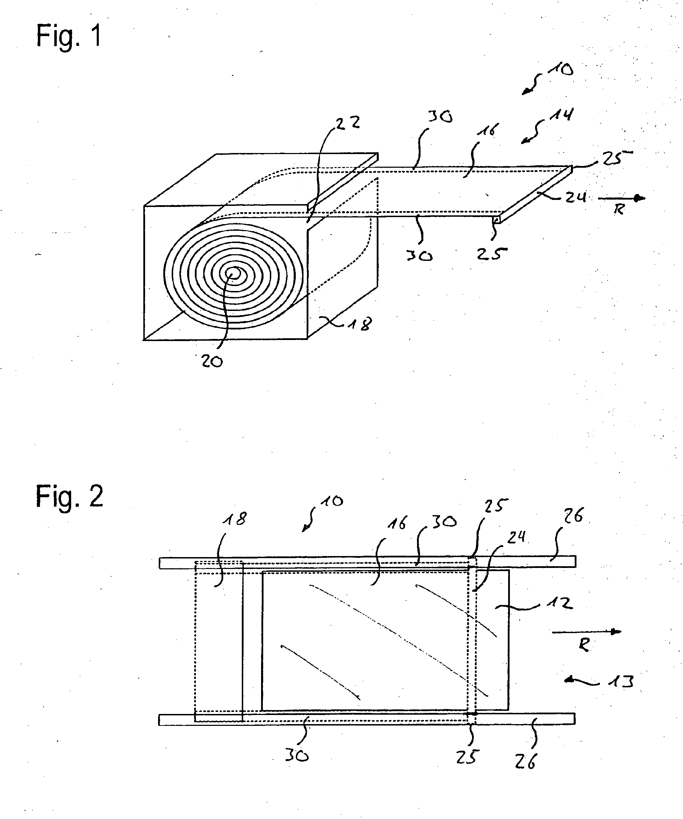

In Figur 1 ist eine Abdeckeinrichtung 10 für ein zumindest abschnittsweise lichtdurchlässiges Dach eines Fahrzeugs gezeigt. Die Abdeckeinrichtung 10 kann, wie in Figur 2 gezeigt ist, einen lichtdurchlässigen Dachabschnitt 12 eines Fahrzeugdaches 13, zum Beispiel Panoramadachs zumindest teilweise abdecken und somit verschatten. Die Abdeckeinrichtung 10 hat dazu eine verfahrbare, mit unterbrochenen Linien dargestellte Abdeckung 14, die von einer Position, in der diese den lichtdurchlässigen Dachabschnitt 12 freigibt und in der Licht in den Fahrzeuginnenraum fallen kann, in eine in Figur 2 dargestellte Position verfahren werden kann, in der die Abdeckung 14 den Dachabschnitt 12 zumindest teilweise abdeckt und so den Fahrzeuginnenraum dadurch verschattet.

Die Abdeckung 14 hat hier eine flexible, aufwickelbare Abdeckbahn 16, auch Rollo genannt, die in einem Gehäuse 18 aufgenommen werden kann. Im Gehäuse 18 ist dazu eine Wickelwelle 20 vorgesehen, an der die Abdeckbahn 16 mit einem Ende befestigt ist und auf der die Abdeckbahn 16 aufgewickelt werden kann. Das Gehäuse 18 hat eine Öffnung 22, durch die die Abdeckbahn 16 aus dem Gehäuse 18 herausgezogen werden kann.

Das Gehäuse 18 ist vorzugsweise Teil eines Querspriegels oder an einem Querspriegel befestigt.

Am freien, beweglichen Ende der Abdeckbahn 16 ist hier ein weiterer Spriegel 24 angeordnet, der sich im Wesentlichen quer zur Fahrzeuglängsachse über die komplette Breite B der Abdeckbahn 16 erstreckt und der der Versteifung der Abdeckbahn 16 dient. Die Enden 25 des Spriegels 24 sind, wie in Figur 2 zu sehen ist, jeweils in Führungsschienen 26 gelagert, die in Richtung der Fahrzeuglängsachse verlaufen.

Zum Ausziehen der Abdeckbahn 16 aus dem Gehäuse 18, also zum Verfahren der Abdeckung 14 in eine Position, in der der lichtdurchlässige Dachabschnitt 12 zumindest teilweise abgedeckt ist, ist ein Antrieb vorgesehen, der am Spriegel 24 angreift und diesen in eine Auszugsrichtung R in Richtung der Fahrzeuglängsachse verschieben kann. Ein solcher Antrieb ist zum Beispiel ein Seilantrieb oder ein Antrieb mit druckfest geführten Kabeln.

Um ein Durchhängen der Abdeckbahn 16 zu verhindern, ist eine Rückstellvorrichtung vorgesehen, die an der Wickelwelle 20 angreift und die Abdeckbahn 16 entgegen der Auszugsrichtung R vorspannt bzw. bei einem Verfahren des Spriegels 24 entgegen der der Auszugsrichtung R einholt und auf der Wickelwelle 20 aufrollt.

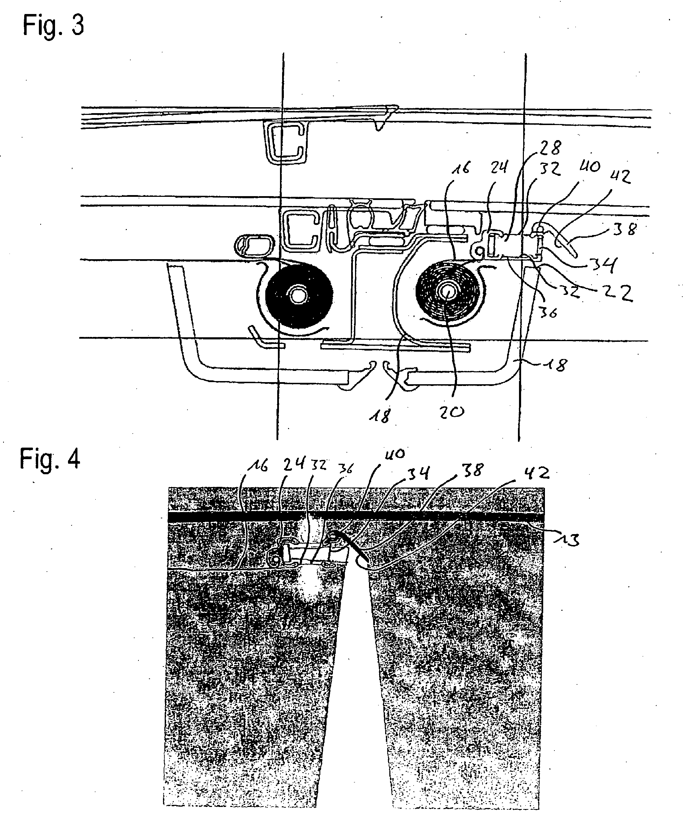

Wie insbesondere in den Figuren 3 und 4 zu sehen ist, ist am Spriegel 24 des Weiteren ein Leuchtmittel 28 vorgesehen, das der Beleuchtung des Fahrzeuginnenraums dient. Das Leuchtmittel 28 ist über ein oder zwei Metallbänder 30, die sich im Wesentlichen in Längsrichtung der Abdeckbahn 16 erstrecken, an die Stromversorgung des Fahrzeugs angeschlossen (siehe Figuren 1 und 2). Die Metallbänder 30 erstrecken sich randseitig über die gesamte Länge der Abdeckbahn 16 und sind mit einem ersten Ende elektrisch leitend mit dem Spriegel 24 bzw. dem Leuchtmittel 28 verbunden und mit einem anderen Ende elektrisch leitend mit der Wickelwelle 20, über die ein Anschluss an die Stromquelle des Fahrzeugs erfolgt, wodurch keine zusätzlichen Kabel oder Stromleiter, beispielsweise Führungsschienen erforderlich sind.

Das Metallband 30 bietet zudem den Vorteil, dass dieses wie eine Spiralfeder vorgespannt sein kann bzw. beim Ausziehen aus dem Gehäuse 18 vorgespannt wird, sodass das Metallband 30 gleichzeitig die Funktion einer Rückstelleinrichtung übernimmt. Eine zusätzliche Rückstellfeder ist dadurch nicht erforderlich.

Das Metallband 30 kann beliebig in bzw. an der Abdeckbahn 16 positioniert sein. Es ist aber vorteilhaft, dass das Metallband randseitig in die Abdeckbahn 16 eingebettet ist, sodass dieses sich in die Führungsschienen 26 erstreckt und zusätzlich eine Stabilisierung der Abdeckbahn 16 ermöglicht. Vorzugsweise sind an beiden Rändern der Abdeckbahn 16 stromleitende Metallbänder 30 vorgesehen. Die Metallbänder 30 verlaufen in den U-förmigen Führungsschienen 26 und sind seitlich geführt, sodass die Abdeckbahn 16 seitlich und axial gespannt ist. Die Metallbänder 30 haben also neben der Aufrollfunktion und der Stromleitung auch noch eine seitliche Führungsfunktion. Die Führungsschienen 26 sind vorzugsweise aus Kunststoff oder kunststoffbeschichtet, um gegenüber den Metallbändern 16 zu isolieren.

Wie in Figur 3 und insbesondere in Figur 4 zu sehen ist, sind an der Ober- und Unterseite des Spriegels 24 vertikale Lichtaustrittsöffnungen 32 vorgesehen, sowie am freien vorderen Rand ein horizontaler Lichtauslass 34. An den vertikalen Lichtaustrittsöffnungen 32 ist jeweils ein Lichtdurchlasskörper 36 vorgesehen, der so ausgebildet ist, dass ein Streulicht erzeugt wird, das für eine gleichmäßige, diffuse Beleuchtung des Fahrzeuginnenraums sorgt.

Am horizontalen Lichtauslass 34 ist ein Reflektor 38 vorgesehen, der zum Beispiel an der oberen Kante des Spriegels 24 schwenkbar um ein Scharniergelenk 40 gelagert ist. Der Reflektor 38 hat einen Spiegel 42, der das aus dem Lichtauslass 34 austretende Licht in den Fahrzeuginnenraum reflektieren kann und so ein gerichtetes Licht bietet, das beispielsweise als Leselicht geeignet ist. Durch ein Verschwenken des Reflektors 38 erfolgt eine Veränderung des Reflexionswinkels, sodass der Abstrahlwinkel des in den Fahrzeuginnenraum abgestrahlten Lichts verändert werden kann. Um eine bessere Fokussierung des Lichts zu erzielen, ist es auch denkbar, dass der Reflektor 38 eine Fokussiereinrichtung aufweist, die das Licht bündeln kann.

Der Reflektor 38 ist hier so ausgebildet, dass dieser flächig an der Vorderkante des Spriegels 24 anliegen und so den horizontalen Lichtauslass 34 abdecken kann. Dadurch kann neben der Einstellung bzw. Änderung des Abstrahlwinkels das Leselicht vollständig auch abgedeckt werden, sodass eine Beleuchtung des Innenraums ausschließlich über das aus der vertikalen Lichtaustrittsöffnung 32 scheinende diffuse Licht erfolgt.

Wie insbesondere in Figur 3 zu sehen ist, ist der Reflektor 38 zudem so ausgebildet, dass dieser bei aufgewickelter Abdeckbahn 16 die Öffnung 22 im Gehäuse 18 abdeckt. Das heißt, der Reflektor 38 dient hier gleichzeitig als Teil der Innenraumverkleidung.

Statt der hier gezeigten Ausführungsform mit einem Leuchtmittel 28 sind auch Ausführungsformen mit mehreren Leuchtmitteln 28 möglich. Es ist beispielsweise denkbar, dass für jeden Sitzplatz im Fahrzeug ein separates Leuchtmittel 28 vorgesehen ist, sodass für jeden Fahrzeuginsassen eine individuelle Einstellung des Lichts denkbar ist. Die Leuchtmittel 28 können jeweils mit separaten Metallbänder 30 an die Stromversorgung des Fahrzeugs angeschlossen sein oder über ein gemeinsames Metallband 30. Alternativ kann auch ein Leuchtmittel vorgesehen sein, aber mehrere über die Länge des Querspriegels 24 verteilt angeordnete Reflektoren.

Das Leuchtmittel 28 kann über einen separaten Schalter und/oder über den Fahrtlichtschalter ein- und ausgeschaltet werden.

## Patentansprüche

1. Abdeckeinrichtung (10) zur Verschattung für ein zumindest abschnittsweise lichtdurchlässiges Dach eines Fahrzeugs, mit zumindest einer verfahrbaren Abdeckung (14), die in ihren verschiedenen Positionen zumindest einen Teil eines lichtdurchlässigen Dachabschnitts (12) abdeckt oder freigibt, und mit wenigstens einem Leuchtmittel (28) zur Innenraumbeleuchtung, wobei die Abdeckung (14) als aufwickelbare Abdeckbahn (16) ausgebildet ist, an der ein im Wesentlichen in Auszugsrichtung verlaufendes Metallband (30) angebracht ist, das das Leuchtmittel (28) elektrisch mit einer Stromquelle verbindet,
**dadurch gekennzeichnet, dass** das wenigstens eine Metallband (30) einen Aufrollantrieb für die Abdeckbahn (16) bildet.

2. Abdeckeinrichtung nach Anspruch 1, **dadurch gekennzeichnet, dass** das Metallband (30) insbesondere randseitig in die Abdeckbahn (16) eingebettet ist.

3. Abdeckeinrichtung nach einem der Ansprüche 1 und 2, **dadurch gekennzeichnet, dass** sich das Metallband (30) in Auszugsrichtung über die gesamte Länge der Abdeckbahn (16) erstreckt.

4. Abdeckeinrichtung nach einem der vorhergehenden Ansprüche, **dadurch gekennzeichnet, dass** mehrere, insbesondere parallel verlaufende, stromleitende Metallbänder (30) vorgesehen sind.

5. Abdeckeinrichtung nach einem der vorhergehenden Ansprüche, **dadurch gekennzeichnet, dass** das Leuchtmittel (28) Licht in den Innenraum abstrahlt und insbesondere eine Leselampe ist.

6. Abdeckeinrichtung nach einem der vorhergehenden Ansprüche, **gekennzeichnet durch** einen Reflektor (38), insbesondere einen Spiegel, der das vom Leuchtmittel (28) abgegebene Licht unmittelbar in den Fahrzeuginnenraum reflektiert, vorzugsweise zur Ausbildung eines Leselichts.

7. Abdeckeinrichtung nach Anspruch 6, **dadurch gekennzeichnet, dass** der Reflektor (38) zur Änderung des Reflexionswinkels verstellbar, insbesondere schwenkbar gelagert ist.

8. Abdeckeinrichtung nach Anspruch 7, **dadurch gekennzeichnet, dass** die Verstellbarkeit des Reflektors (38) so ausgebildet ist, dass der Deflektor (36) in einer Position einen Lichtauslass (34) schließt.

9. Abdeckeinrichtung nach einem der vorhergehenden Ansprüche, **dadurch gekennzeichnet, dass** das Leuchtmittel (28) in oder an einem Querspriegel (24) angeordnet ist, der sich quer zur Fahrzeuglängsachse erstreckt und an dem ein Längsende der Abdeckung (14) gelagert ist.

10. Abdeckeinrichtung nach Anspruch 9, **dadurch gekennzeichnet, dass** der Querspriegel (24) ein zum Verfahren der Abdeckung (14) manuell oder motorisch antreibbarer Spriegel ist.

11. Abdeckeinrichtung nach Anspruch 9 oder 10, **dadurch gekennzeichnet, dass** der Querspriegel (24) wenigstens eine vertikale Lichtaustrittsöffnung (32) aufweist, an der insbesondere ein Streulicht erzeugender Lichtdurchlasskörper (36) angeordnet ist.

12. Abdeckeinrichtung nach einem der vorhergehenden Ansprüche, **dadurch gekennzeichnet, dass** ein Gehäuse (18) vorgesehen ist, in dem die Abdeckung (14) in der Position, in der der lichtdurchlässige Dachabschnitt freigelegt ist. aufgenommen ist.

13. Abdeckeinrichtung nach Anspruch 12, **dadurch gekennzeichnet, dass** die Abdeckung (14) eine aufwickelbare Abdeckbahn (16) ist und im Gehäuse (18) ein Aufrollmechanismus für die Abdeckbahn (16) untergebracht ist.

14. Abdeckeinrichtung nach Anspruch 13, **dadurch gekennzeichnet, dass** am zu verfahrenden freien Ende der Abdeckbahn (16) ein Spriegel (24) vorgesehen ist, der bei aufgerollter Abdeckbahn (16) in eine Öffnung (22) des Gehäuses (18) ragt oder in das Gehäuse (18) eingefahren ist.

## Claims

1. Covering device (10) for the shading for an at least partially translucent roof of a vehicle, comprising at least one movable cover (14), which in its various positions covers or uncovers at least a part of a translucent roof section (12), and further comprising at least one illumination means (28) for interior illumination, wherein the cover is designed as a covering web (16), which can be wound up and to which a metal strip (30), which extends substantially in the pull-out direction and which electrically connects the illumination means (28) to a power source, is attached, **characterised in that** the at least one metal strip (30) forms a winding-up drive for the covering web (16).

2. Covering device according to claim 1, **characterised in that** the metal strip (30) is embedded into the covering web (16), in particular at the edges.

3. Covering device according to claim 1 or 2, **characterised in that** the metal strip (30) extends along the entire length of the covering web (16) in the pull-out direction.

4. Covering device according to any of the preceding claims, **characterised in that** several current-conducting metal strips (30), extending parallel to one another in particular, are provided.

5. Covering device according to any of the preceding claims, **characterised in that** the illumination means (28) radiates light into the interior and is a reading light in particular.

6. Covering device according to any of the preceding claims, **characterised by** a reflector (38), in particular a mirror, which directly reflects the light emitted by the illumination means (28) into the vehicle interior, preferably for forming a reading light.

7. Covering device according to claim 6, **characterised in that** the reflector (38) is adjustably, in particular pivotably, mounted for changing the reflection angle.

8. Covering device according to claim 7, **characterised in that** the adjustability of the reflector (38) is designed such that the reflector (38) closes a light outlet (34) in one position.

9. Covering device according to any of the preceding claims, **characterised in that** the illumination means (28) is mounted in or on a transverse mirror (24), which extends at right angles to the longitudinal axis of the vehicle and on which a longitudinal end of the cover (14) is mounted.

10. Covering device according to claim 9, **characterised in that** the transverse mirror (24) is a mirror which can be driven manually or by a motor for moving the cover (14).

11. Covering device according to claim 9 or 10, **characterised in that** the transverse mirror (24) has at least one vertical light outlet opening (32), on which the light passage body (36), which generates a diffused light in particular, is located.

12. Covering device according to any of the preceding claims, **characterised in that** a housing (18) is provided, in which the cover (14) is accommodated in the position in which the translucent roof section is exposed.

13. Covering device according to claim 12, **characterised in that** the cover (14) is a covering web (16), which can be wound up, and **in that** a winding-up mechanism for the covering web (16) is accommodated in the housing (18).

14. Covering device according to claim 13, **characterised in that** a mirror (24), which projects into an opening (22) of the housing (18) or is retracted into the housing (18) when the covering web (16) is wound up, is provided at the movable free end of the covering web (16).

## Revendications

1. Dispositif de recouvrement (10) destiné à obscurcir un toit de véhicule automobile transparent au moins à certains endroits, ayant au moins un revêtement (14) déplaçable, qui recouvre ou libère dans ses différentes positions au moins une partie de la section (12) de toit transparente, et ayant au moins un moyen d'éclairage (28) destiné à éclairer l'habitacle, le revêtement (14) étant conçu comme une bande (16) de recouvrement enroulable, sur laquelle est montée une bande métallique (30) s'étendant sensiblement dans la direction d'extension, ladite bande reliant électriquement le moyen d'éclairage (28) à une source électrique, **caractérisé en ce que** l'au moins une bande métallique (30) forme un entraînement d'enroulement pour la bande de recouvrement (16).

2. Dispositif de recouvrement selon la revendication 1, **caractérisé en ce que** la bande métallique (30) est encastrée en particulier sur le bord dans la bande de recouvrement (16).

3. Dispositif de recouvrement selon l'une quelconque des revendications 1 et 2, **caractérisé en ce que** la bande métallique (30) s'étend dans la direction d'extension sur toute la longueur de la bande de recouvrement (16).

4. Dispositif de recouvrement selon l'une quelconque des revendications précédentes, **caractérisé en ce qu'**il est prévu plusieurs bandes métalliques (30) en particulier électroconductrices, parallèles.

5. Dispositif de recouvrement selon l'une quelconque des revendications précédentes, **caractérisé en ce que** le moyen d'éclairage (28) émet de la lumière dans l'habitacle et est en particulier une liseuse.

6. Dispositif de recouvrement selon l'une quelconque des revendications précédentes, **caractérisé par** un réflecteur (38) en particulier un miroir, qui réfléchit la lumière émise par le moyen d'éclairage (28) directement dans l'habitacle du véhicule automobile, de préférence afin de former une lumière permettant de lire.

7. Dispositif de recouvrement selon la revendication 6, **caractérisé en ce que** le réflecteur (38) destiné à modifier l'angle de réflexion est monté de manière à pouvoir être réglé, en particulier est monté en pivotement.

8. Dispositif de recouvrement selon la revendication 7, **caractérisé en ce que** la possibilité de réglage du réflecteur (38) est conçue de telle sorte que le réflecteur (38) ferme dans une position une sortie de lumière (34).

9. Dispositif de recouvrement selon l'une quelconque des revendications précédentes, **caractérisé en ce que** le moyen d'éclairage (28) est disposé dans ou sur un arceau transversal (24) qui s'étend transversalement par rapport à l'axe longitudinal de véhicule et sur lequel une extrémité longitudinale du revêtement (14) est montée.

10. Dispositif de recouvrement selon la revendication 9, **caractérisé en ce que** l'arceau transversal (24) est un arceau entraîné manuellement ou de manière motorisée afin de déplacer le revêtement (14).

11. Dispositif de recouvrement selon la revendication 9 ou 10, **caractérisé en ce que** l'arceau transversal (24) présente au moins une ouverture de sortie de lumière (32) verticale sur laquelle est disposé en particulier le corps de transmission de lumière (36) générant une lumière diffusée.

12. Dispositif de recouvrement selon l'une quelconque des revendications précédentes, **caractérisé en ce qu'**il est prévu un boîtier (18) dans lequel est logé le revêtement (14) dans la position dans laquelle la section de toit transparente est dégagée.

13. Dispositif de recouvrement selon la revendication 12, **caractérisé en ce que** le revêtement (14) est une bande de recouvrement (16) enroulable et dans le boîtier (18) est logé un mécanisme d'enroulement pour la bande de recouvrement (16).

14. Dispositif de recouvrement selon la revendication 13, **caractérisé en ce qu'**il est prévu un arceau (24) sur l'extrémité pouvant se déplacer librement de la bande de recouvrement (16), ledit arceau avance dans une ouverture (22) du boîtier (18) ou est rentrée dans le boîtier (18) lorsque la bande de recouvrement (16) est enroulée.
